# EUROPÄISCHE PATENTSCHRIFT

(11) **EP 2 943 314 B1**
(45) Veröffentlichungstag und Bekanntmachung des Hinweises auf die Patenterteilung: **19.04.2017**
(21) Anmeldenummer: 14792722.2
(22) Anmeldetag: 29.09.2014
(51) Int. Cl.: B24B 7/24, B24B 9/10, C03B 33/023, C03B 33/037, C03B 33/07

(54) **VERFAHREN ZUM BEARBEITEN DER OBERFLÄCHE VON GEGENSTÄNDEN**
METHOD FOR TREATING THE SURFACE OF OBJECTS
PROCÉDÉ DE TRAITEMENT DE LA SURFACE D'OBJETS

(30) Priorität: 18.10.2013 AT 8042013
(43) Veröffentlichungstag der Anmeldung: 18.11.2015
(73) Patentinhaber: LISEC Austria GmbH, 3353 Seitenstetten (AT)
(72) Erfinder: MARAT, Daniel, A-3300 Amstetten-Greinsfurth (AT); MADER, Leopold, A-3364 Neuhofen/Ybbs (AT)
(74) Vertreter: Beer & Partner Patentanwälte KG
(86) Internationale Anmeldenummer: PCT/AT2014/000177
(87) Internationale Veröffentlichungsnummer: WO 2015/054707

(56) Entgegenhaltungen:
- WO-A1-2010/015357
- DE-U1- 29 521 396
- US-A1- 2006 236 840
- US-A1- 2012 270 475

## Beschreibung

Die Erfindung betrifft ein Verfahren zum Entschichten von Glastafeln mit den Merkmalen des einleitenden Teils von Anspruch 1.

Beim Verarbeiten von beschichteten Glastafeln zu Isolierglas ist es erforderlich, dass die Ränder der Glaszuschnitte von einer Beschichtung befreit (entschichtet) sind, damit ein sicherer Zusammenbau von Isolierglas möglich ist. Ein Entschichten kann schon vor dem Teilen von Glastafeln in Glaszuschnitte erfolgen.

Für das Entschichten, also das abtragende Bearbeiten von Glastafeln, um von diesen Beschichtungen bereichsweise zu entfernen, sind verschiedene Vorrichtungen bekannt geworden. Verwiesen wird beispielhaft auf die AT 405 724 B, die AT 403 690 B, die WO 2008/107087 A und die EP 0 603 152 A.

Glasschneidetische, auf denen auch entschichtet werden kann, sind in verschiedenen Ausführungsformen bekannt, in welchem Zusammenhang beispielhaft auf die AT 386 595 B, EP 0 192 920 B oder die EP 1 654 200 B verwiesen werden kann.

Die bekannten Entschichtungsvorrichtungen, die auch mit einem Werkzeug (Schneidrädchen) zum Ritzen der Glastafel kombiniert sein können, arbeiten mit Schleifscheiben ("Umfangsscheiben"), die mit ihrem Umfang auf die Beschichtung der Glastafel einwirken, um diese zu entfernen.

Verfahren und Vorrichtungen zum Entschichten sind auch aus der US 7,273,406 B (= US 2006/236840 A), der CN 697 240 B und der EP 2 386 602 B (= US 2012/270475 A) bekannt.

Aus der US 2006/236840 A ist ein Werkzeug zum Entschichten bekannt, das einem Werkzeug zum Ritzen von Glastafeln in einem Abstand hinterherläuft, wobei eine gleichzeitige Bewegung beider Werkzeuge erfolgt, sobald ein Minimalabstand zwischen den beiden Werkzeugen erreicht ist.

Die CN 697 240 B betrifft das Einstellen einer definierten Anpresskraft eines Schleifwerkzeuges auf eine Glasscheibe.

Die EP 2 486 602 B lehrt das Entschichten von Solarmodulen mit einem kronenartigen Schleifer.

Das Arbeiten mit den bekannten Vorrichtungen zum Bearbeiten der Oberfläche von Glastafeln, insbesondere Entschichtungsvorrichtungen, hat sich aber in verschiedenen Fällen, beispielsweise am Beginn eines Bearbeitungsvorganges, als problematisch erwiesen, sodass Bedarf an einem verbesserten Verfahren zum Entschichten von beschichteten Glastafeln, besteht.

Der Erfindung liegt die Aufgabe zugrunde, ein Verfahren der eingangs genannten Gattung, insbesondere zum Entschichten von Glastafeln, zur Verfügung zu stellen.

Gelöst wird diese Aufgabe erfindungsgemäß mit einem Verfahren, das die Merkmale des unabhängigen, auf das Verfahren gerichteten, Anspruches aufweist.

Bevorzugte Ausgestaltungsmöglichkeiten des erfindungsgemäßen Verfahrens sind Gegenstand der Unteransprüche.

Da bei der Erfindung das Schleifwerkzeug nicht am Ende des (streifenförmigen) Bereiches, der entschichtet werden soll, sondern mit Abstand von den Enden desselben angesetzt und dort mit dem Bearbeiten (Entschichten) begonnen wird, ergibt sich das oben erwähnte Problem nicht mehr. Bei der Erfindung wird verhindert, dass am Beginn eines Entschichtungsvorganges fehlerhafte Stellen, insbesondere unerwünschte Entschichtungen, entstehen bzw. Verschmutzungen zurückbleiben. Damit ergibt sich ein sauberer Anfang (der Entschichtung) in dem Bereich, in dem die Glastafel entschichtet worden ist.

Wenn gemäß einer bevorzugten Ausführungsform des erfindungsgemäßen Verfahrens ein schräges ("fliegendes"), also zur Glasscheibe nicht normal ausgerichtetes, Ansetzen des Schleifwerkzeuges in einer geraden oder gekrümmten Bewegungsbahn vorgenommen wird, ergibt sich der Vorteil, dass das Schleifwerkzeug sanft auf die Glastafel aufgesetzt wird, weil es eben schräg, also unter einem (spitzen) Winkel, auf die Glastafel zugestellt wird und auf dieser sanft "einschleifend landet".

Die erfindungsgemäße Verfahrensweise ergibt einen sauberen Anfang der Entschichtung, da das Schleifwerkzeug nicht an einem Ende des Entschichtungsbereiches angesetzt wird. Das Schleifwerkzeug wird zunächst zu einem Ende des Entschichtungsbereiches hin bewegt. Dann wird an dem einen Ende des Entschichtungsbereiches die Richtung seiner Bewegung geändert und das Schleifwerkzeug zum anderen Ende des Entschichtungsbereiches hin bewegt. So wird der Anfangsbereich des Entschichtungsbereiches zweimal überstrichen. Weiters ergibt sich der Vorteil, dass die Stelle, in der das Schleifwerkzeug aufgesetzt wird, nicht genau definiert sein muss.

Durch die erfindungsgemäße Verwendung eines Schleifwerkzeuges mit einem zylindrischen Schleifkörper ("Geradschleifer") mit im Wesentlichen kreisrunder Wirkfläche als die Fläche des Schleifkörpers, die auf die Glastafel einwirkt, um deren Beschichtung in einem streifenförmigen Entschichtungsbereich zu entfernen, verhindert ein zur Drehachse des Schleifwerkzeuges konzentrisches Loch, dass sich beim Abnützen des Schleifwerkzeuges im Bereich der Achse und um diese herum ein konvexer, vorstehender Bereich, z.B. ein kegelförmiger Vorsprung, ergibt, der die Entschichtungswirkung beeinträchtigen würde.

Weitere Vorteile des erfindungsgemäß verwendeten Schleifwerkzeuges sind:
a) Das bei Schleifscheiben (Umfangsscheiben) typischerweise nötige Abrichten entfällt.
b) Der Betrieb von Umfangsscheiben ist mit großen, parallel oder antiparallel zur Schleifrichtung wirkenden Kräften verbunden (die Schleifscheibe treibt an oder bremst), die von der Maschinenkonstruktion aufgenommen werden müssen. Diese entfallen im Falle eines Geradschleifers.
c) Einfacherer Werkzeugwechsel.

Des Weiteren kann im Rahmen der Erfindung vorgesehen sein, dass in der Wirkfläche des Schleifwerkzeuges wenigstens eine vom dort mündenden Loch (radial) nach außen gerichtete Nut vorgesehen ist. Diese Nut hat den Vorteil, dass das Schleifwerkzeug gekühlt wird und durch die Nut abgetragenes Beschichtungsmaterial entfernt werden kann.
Bei der Erfindung kann auch vorgesehen sein, dass dem Schleifwerkzeug eine Düse zugeordnet ist, aus der ein Gasstrom (Luftstrom) austritt und abgetragenes Beschichtungsmaterial wegbläst.

In einer beispielhaften Ausführungsform des erfindungsgemäßen Verfahrens kann vorgesehen sein, dass das Schleifwerkzeug außermittig des zu entschichtenden Bereiches, also mit geringerem Abstand von einem Ende des zu bearbeitenden Bereiches auf die Glastafel aufgesetzt wird, wobei das Schleifwerkzeug bevorzugt zunächst zu dem Ende des zu bearbeitenden Bereiches, hinbewegt wird, von dem es beim Aufsetzen auf die Glastafel einen kleineren Abstand aufweist als zum anderen Ende.

In einer beispielhaften Ausführungsform des erfindungsgemäßen Verfahrens kann vorgesehen sein, dass das Schleifwerkzeug beim Aufsetzen auf die Glastafel in einer Richtung bewegt wird, die mit der Ebene der Glastafel einen spitzen Winkel einschließt, wobei die Bewegungsbahn des Schleifwerkzeuges gerade oder gekrümmt ist.

In einer beispielhaften Ausführungsform des erfindungsgemäßen Verfahrens kann vorgesehen sein, dass ein Schleifkörper des Schleifwerkzeuges ohne vorheriges Bestimmen der Dicke der Glastfel und/oder der Abnützung des Schleifkörpers der Glastafelangenähert wird und dass das Annähern abgebrochen wird, sobald der Schleifkörper die Glastafel berührt.

Bei dem erfindungsgemäßen Verfahrens ist vorgesehen, dass ein Schleifwerkzeug mit einem Schleifkörper verwendet wird, dessen Wirkfläche im Wesentlichen kreisrund ist und konzentrisch zu seiner Drehachse ein Loch, das in der Wirkfläche mündet, aufweist.

In einer beispielhaften Ausführungsform des erfindungsgemäßen Verfahrens kann vorgesehen sein, dass ein Schleifwerkzeug mit einem Schleifkörper verwendet wird, dessen Wirkfläche wenigstens eine Nut aufweist.

In einer beispielhaften Ausführungsform des erfindungsgemäßen Verfahrens kann vorgesehen sein, dass die wenigstens eine Nut bezüglich der Drehachse des Schleifkörpers radial ausgerichtet ist oder von der Drehachse Abstand aufweist.

In einer beispielhaften Ausführungsform des erfindungsgemäßen Verfahrens kann vorgesehen sein, dass die Nut nachgearbeitet oder eine neue Nut erzeugt wird, wenn der Schleifkörper im Wesentlichen bis zum Boden der Nut abgenützt worden ist.

In einer beispielhaften Ausführungsform des erfindungsgemäßen Verfahrens kann vorgesehen sein, dass auf das Schleifwerkzeug, insbesondere dessen Wirkfläche, ein Gasstrom, insbesondere ein Luftstrom, gerichtet wird, um beim Abtragen anfallendes Material, insbesondere beim Entschichten angefallenes Beschichtungsmaterial, wegzublasen.

In einer beispielhaften Ausführungsform des erfindungsgemäßen Verfahrens kann vorgesehen sein, dass der Gasstrom unter spitzem Winkel auf die Glastafel und/oder auf die Umfangsfläche des Schleifwerkzeuges gerichtet wird.

In einer beispielhaften Ausführungsform des erfindungsgemäßen Verfahrens kann vorgesehen sein, dass eine Glastafel in wenigstens einem entschichteten Bereich geritzt wird, um das Teilen der Glastafel vorzubereiten.
In einer beispielhaften Ausführungsform des erfindungsgemäßen Verfahrens kann vorgesehen sein, dass das Ritzen während des Entschichtens der Glastafel ausgeführt wird.

In einer beispielhaften Ausführungsform des erfindungsgemäßen Verfahrens kann vorgesehen sein, dass das Ritzen ausgeführt wird, nachdem alle zu entschichtenden Bereiche entschichtet worden sind.

In einer beispielhaften Ausführungsform des erfindungsgemäßen Verfahrens kann vorgesehen sein, dass die Glastafel in der Mitte des wenigstens einen entschichteten Bereiches geritzt wird.

In einer beispielhaften Ausführungsform des erfindungsgemäßen Verfahrens kann vorgesehen sein, dass die Glastafel außermittig des wenigstens einen entschichteten Bereiches geritzt wird.

In einer einer Vorrichtung, die zum Ausführen des erfindungsgemäßen Verfahrens verwendet werden kann, kann zum Erzeugen und/oder Nacharbeiten von Nuten ein abtragendes Werkzeug, insbesondere ein Sägeblatt vorgesehen sein, wobei zwischen abtragendem Werkzeug und Schleifkörper eine Relativbewegung erzeugt wird.

Weitere Einzelheiten und Merkmale sowie Vorteile des erfindungsgemäßen Verfahrens ergeben sich aus der nachstehenden Beschreibung eines Entschichtens als bevorzugtes Ausführungsbeispiel anhand der Zeichnungen. Es zeigt:
Fig. 1 eine Vorrichtung zum Entschichten und Ritzen einer Glastafel in Schrägansicht,
Fig. 2 ein Schleifwerkzeug in Schrägansicht,
Fig. 3 schematisch das Ansetzen des Schleifwerkzeuges und
Fig. 4 schematisch den Verlauf eines Entschichtungsvorganges.

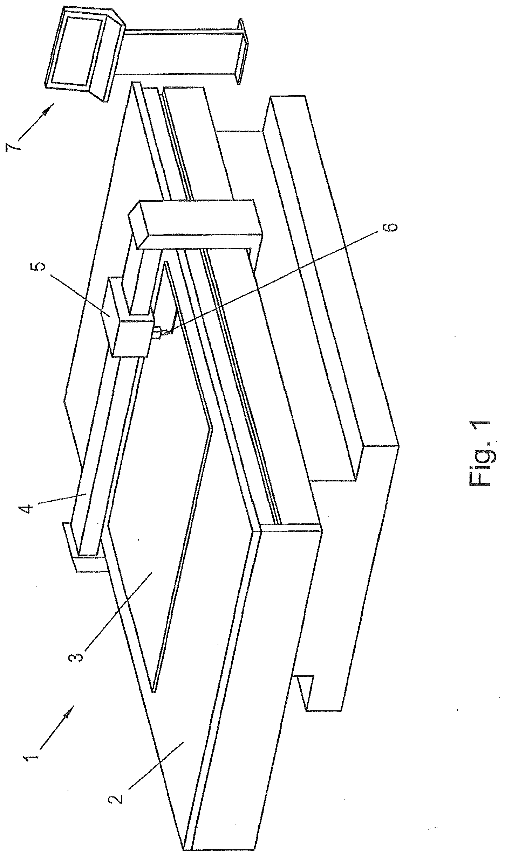

Eine in Fig. 1 gezeigte Vorrichtung 1 ist nach Art eines Glasschneidetisches ausgebildet und besitzt eine als Luftkissenbett ausgebildete Auflagefläche 2 (Tisch) für eine zu bearbeitende Glastafel 3. Der Auflagefläche 2 zugeordnet ist eine Brücke 4, die an den Seitenrändern der Auflagefläche 2 verschiebbar geführt ist. Auf der Brücke 4 ist ein Schlitten 5 vorgesehen, der entlang der Brücke 4 verschiebbar ist.

Sowohl für das Bewegen der Brücke 4 entlang der Auflagefläche 2, als auch für das Bewegen des Schlittens 5 entlang der Brücke 4, sind Antriebe vorgesehen.

Durch Bewegen der Brücke 4 einerseits und/oder des Schlittens 5 mit einem Bearbeitungskopf umfassend ein Schleifwerkzeug 6 anderseits, können beliebige (gerade/gekrümmte) Bahnen, beispielsweise entsprechend dem vorgesehenen Aufteilungsmuster der Glastafel 3, abgefahren werden.

Für das Bedienen und Steuern der Vorrichtung 1 ist ein Steuer- und Bedienpult 7 vorgesehen.

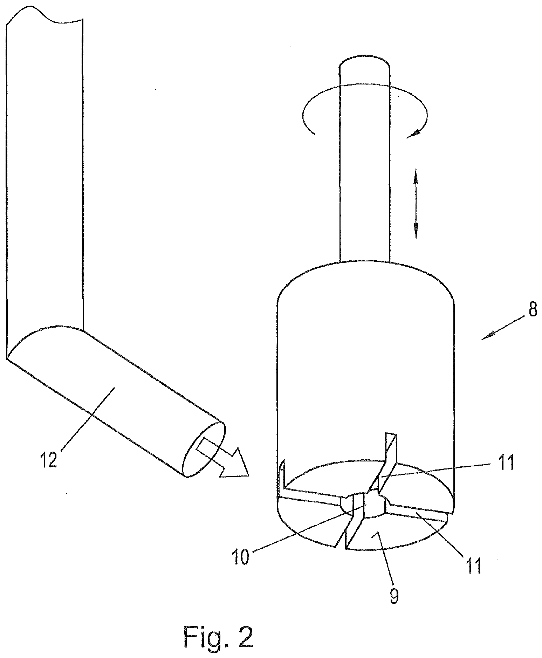

Der am Schlitten 5 vorgesehene Bearbeitungskopf besitzt als wesentlichen Bestandteil das Schleifwerkzeug 6, das durch einen Antrieb quer zur Ebene der Auflagefläche 2 anhebbar und absenkbar ist. Dem Schleifwerkzeug 6, das im Beispiel als Schleifwerkzeug 6 mit einem Schleifkörper 8 (Fig. 2) ausgebildet ist, ist ein Drehantrieb zugeordnet, um den Schleifkörper 8 um seine Achse in Drehung zu versetzen, wenn das Schleifwerkzeug 6 zum Abtragen einer Beschichtung von einer Glastafel 3 verwendet wird.

In einer bevorzugten Ausführungsform weist der Bearbeitungskopf auch ein Werkzeug zum Ritzen der Glastafel 3 auf, sodass die Glastafel 3 nach dem Entschichten entsprechend dem gewünschten Aufteilungsmuster der Glastafel 3 im Bereich der Streifen, in denen die Beschichtung abgetragen worden ist ("Entschichtungsbereiche"), geritzt wird, sodass die Glastafel 3 dann in Zuschnitte zerteilt (gebrochen) werden kann.

Das Werkzeug zum Ritzen der Glastafel 3 kann auch auf einem Bearbeitungskopf vorgesehen sein, der auf einem vom Schlitten 5 gesonderten Schlitten angeordnet ist.

Das im Rahmen der Erfindung bevorzugt verwendbare Schleifwerkzeug 6 ist in einer Ausführungsform in Fig. 2 schematisch dargestellt. Es weist einen (kreis-)zylinderförmigen Schleifkörper 8 mit einer Wirkfläche 9 auf, die auf die Glastafel 3 zum Entschichten aufgesetzt wird.

In der Mitte der Wirkfläche 9 des Schleifkörpers 8, also konzentrisch zu seiner Drehachse, mündet ein Loch 10 (Sackloch). Das Loch 10 verhindert, dass sich beim Abnützen des Schleifkörpers 8 (Abnützen von dessen als Wirkfläche 9 dienender Stirnfläche) im Bereich um die Drehachse ein konvexer (kegelförmiger) Bereich bildet.

Zusätzlich sind in der Wirkfläche 9 des Schleifkörpers 8 im gezeigten Ausführungsbeispiel vier Nuten 11 vorgesehen, die sich vom mittigen Loch 10 zur Umfangfläche des Schleifkörpers 8 hin erstrecken. Die Zahl der Nuten 11 ist nicht wesentlich, es kann/können eine, zwei, drei, wie gezeigt vier oder auch mehr Nuten 11 vorgesehen sein. Die Nuten 11 können auch verschieden tief sein.

Die Mittelebenen der Nuten 11 gehen bevorzugt, aber nicht zwingend, durch die Achse des Schleifkörpers 8.

Die Nuten 11 können auch durch achsparallele Nuten, die zur Seitenfläche des Schleifkörpers 8 hin offen sind und in dessen Wirkfläche enden, gebildet sein.

Der Schleifkörper 8 kann aus einem elastischen Werkstoff (Polymer) bestehen, in den abrasives Material (SiC, Al₂O₃) eingebettet ist.

In Fig. 2 ist gezeigt, dass dem Schleifkörper 8 des Schleifwerkzeuges 6 eine Düse 12 zugeordnet ist, die mit Druckgas (Druckluft) beaufschlagt wird, um abgetragenes Beschichtungsmaterial wegzublasen.

Der Luftstrom hat den weiteren Vorteil, dass das üblicherweise zwischen Glastafeln vorgesehene Trennmittelpulver, das sich nach Auflage auf den Schneidtisch noch auf der Oberfläche der Glastafel 3 befinden kann, vom Wirkbereich des Schleifkörpers 8 weggeblasen wird. Das Trennmittelpulver könnte durch Schleifhitze verkohlen und so unerwünschte Rückstände bilden. Auch andere Schmutzpartikel werden entfernt. Ein weiterer Effekt des Luftstroms: Er kühlt beim Entschichten.

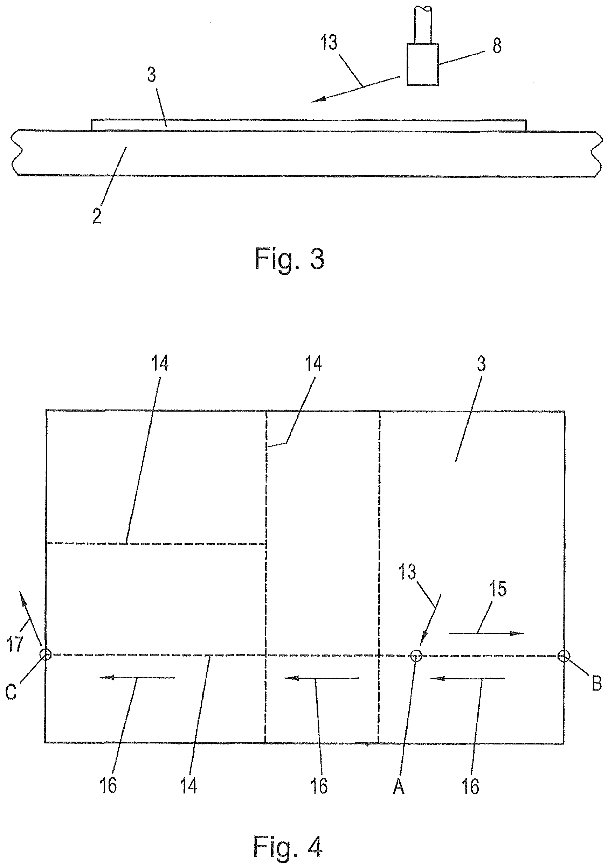

Beim Ausführen des erfindungsgemäßen Verfahrens unter Benützen der beschriebenen Vorrichtung wird beispielsweise wie folgt gearbeitet:
Nachdem eine Glastafel 3 auf der Auflagefläche 2 der Vorrichtung 1 aufgelegt und - unter Zuhilfenahme von aktivierbaren Anschlägen - ausgerichtet worden ist, wird das Schleifwerkzeug 6 mit seinem Schleifkörper 8 in einer geraden oder gekrümmten Bewegung, die zu der Ebene der Glastafel unter einem spitzen Winkel (Pfeil 13 in Fig. 3) ausgerichtet ist, "fliegend" angesetzt und landet somit sanft einschleifend auf der Beschichtung der Glastafel 3.

Das Zustellen des Schleifkörpers 8 erfolgt dabei "auf Anschlag", sodass es nicht erforderlich ist, die Dicke der Glastafel 3 und/oder die Abnützung des Schleifkörpers 8 zu erfassen, und das Zustellen des Schleifkörpers 8 entsprechend der erfassten Glasdicke und/oder Abnützung des Schleifkörpers 8 zu steuern. Unter "auf Anschlag" ist zu verstehen: Annähern der Wirkfläche 9 des Schleifkörpers 8 auf die Oberfläche, die entschichtet werden soll, und Belasten des Schleifkörpers 8 gegen die Oberfläche mit einer vorbestimmten Kraft.

Vorgesehen ist weiter (vgl. Fig. 4), dass der Punkt A, in dem der Schleifkörper 8 auf die Glastafel 3 bzw. deren Beschichtung auftrifft, nicht am Ende eines Bereiches 14 (in Fig. 4 strichliert angedeutet), der zu entschichten ist, liegt, sondern mit Abstand von den Enden B und C des Bereiches 14. Dann wird das Schleifwerkzeug 6 mit seinem Schleifkörper 8 durch Bewegen der Brücke 4 und/oder des Schlittens 5, der den Bearbeitungskopf mit dem Schleifwerkzeug 6 trägt, zu dem einen Ende B des Bereiches 14, in dem entschichtet werden soll (Pfeil 15), bewegt und dann nach Umkehr der Bewegungsrichtung (Pfeile 16) vom Ende B bis zum anderen Ende C des streifenförmigen Bereiches 14 hin bewegt, während Beschichtung abgetragen wird. Abgetragenes Beschichtungsmaterial wird durch den aus der Düse 12 austretenden Luftstrom weggeblasen. Sobald das Ende C des Bereiches 14 erreicht ist, wird das Schleifwerkzeug 6 von der Glasscheibe 3 abgehoben (Pfeil 17). Danach können weitere Bereiche 14, wie zuvor beschrieben, entschichtet werden. Die Bewegungen des Bearbeitungskopfes mit dem Schleifwerkzeug 6 entsprechen dem gewünschten Aufteilmuster (dieses ist beispielhaft in Fig. 4 strichliert angedeutet), nach dem die Glastafel 3, nachdem die Bereiche 14 entsprechend dem Aufteilmuster entschichtet worden sind, geritzt und in Zuschnitte geteilt werden soll. Die Ritzlinien können in der Mitte entschichteter Bereiche oder zu diesen außermittig liegen.

Wenn die Nuten 11 in der Wirkfläche 9 des Schleifkörpers 8 wegen Abnützung des Schleifkörpers 8 zu flach geworden sind, können diese nachgearbeitet (vertieft) werden. Hierzu kann beispielsweise in einem Bereich der Auflagefläche 2 der Vorrichtung 1 eine Einrichtung zum Nacharbeiten vorgesehen sein, die beispielsweise mit einem Werkzeug nach Art eines Kreissägeblattes ausgestattet ist. Anstatt eine Nut 11 nachzuarbeiten, besteht die Möglichkeit, in der Wirkfläche 9 des Schleifkörpers 8 eine neue Nut 11 einzuarbeiten.

Zusammenfassend kann ein Ausführungsbeispiel der Erfindung wie folgt beschrieben werden:
Beim Entschichten einer Glastafel 3 wird ein Schleifwerkzeug 6 mit einem kreiszylindrischen Schleifkörper 8, der um seine Achse in Drehung versetzt wird, verwendet. In der beim Entschichten als Wirkfläche 9 dienenden Stirnfläche des Schleifkörpers 8 sind ein Loch 10 und wenigstens eine radiale Nut 11 vorgesehen. Das Schleifwerkzeug 6 wird in einer zur Ebene der Glastafel 3 unter einem spitzen Winkel ausgerichteten Bewegung (Pfeil 13) an einer Stelle A auf die Glastafel 3 aufgesetzt, die zwischen den Enden B und C des streifenförmigen Entschichtungsbereiches 14 liegt, und zuerst zu dem einen Ende B hin (Pfeil 15) und dann zu dem anderen Ende C hin (Pfeil 16) bewegt, um von der Glastafel 3 im Entschichtungsbereich 14 Beschichtung abzutragen.

## Patentansprüche

1. Verfahren zum Entschichten von Glastafeln (3), bei dem ein Schleifwerkzeug (6) mit einem Schleifkörper (8) verwendet wird, dessen Wirkfläche (9) im Wesentlichen kreisrund ist und konzentrisch zu seiner Drehachse ein Loch (10), das in der Wirkfläche (9) mündet, aufweist, wobei das Schleifwerkzeug (6) zum Entfernen einer Beschichtung der Glastafel (3), relativ zum Gegenstand bewegt wird, **dadurch gekennzeichnet, dass** das Schleifwerkzeug (6) an einer Stelle (A), die von den Enden (B, C) eines Bereiches (14), in dem die Glastafel (3) entschichtet werden soll, Abstand aufweist, auf die Glastafel aufgesetzt wird und dass das Schleifwerkzeug (6) zu einem Ende (B) hin bewegt und dann in entgegengesetzter Bewegung relativ zur Glastafel (3) bis zum anderen Ende (C) hin bewegt wird.

2. Verfahren nach Anspruch 1, **dadurch gekennzeichnet, dass** das Schleifwerkzeug (6) beim Aufsetzen auf die Glastafel (3) in einer Richtung (Pfeil 13) bewegt wird, die mit der Ebene der Glastafel (3) einen spitzen Winkel einschließt, wobei die Bewegungsbahn des Schleifwerkzeuges (6) gerade oder gekrümmt ist.

3. Verfahren nach Anspruch 1 oder 2, **dadurch gekennzeichnet, dass** ein Schleifwerkzeug (6) mit einem Schleifkörper (8) verwendet wird, dessen Wirkfläche (9) wenigstens eine Nut (11) aufweist.

4. Verfahren nach einem der Ansprüche 1 bis 3, **dadurch gekennzeichnet, dass** auf das Schleifwerkezug (6), insbesondere dessen Wirkfläche (9), ein Gasstrom, insbesondere ein Luftstrom, gerichtet wird, um beim Entschichten angefallenes Beschichtungsmaterial, wegzublasen.

5. Verfahren nach einem der Ansprüche 1 bis 4, **dadurch gekennzeichnet, dass** eine Glastafel (3) in wenigstens einem entschichteten Bereich geritzt wird, um das Teilen der Glastafel (3) vorzubereiten.

6. Verfahren nach Anspruch 5, **dadurch gekennzeichnet, dass** die Glastafel (3) in der Mitte des wenigstens einen entschichteten Bereiches geritzt wird.

## Claims

1. Method for decoating of glass panels (3), in which a grinding tool (6) comprising a grinding element (8) is used, the active face (9) is generally circular and comprises a hole (10)concentric to its axis of rotation and terminating in the active face (9), whereby the grinding tool (6) for removing a coating of the glass panel (3) is moved relative to the object, **characterized in that** the grinding tool (6) is placed of the glass panel at a spot (A), that has distance from the ends (B,C) of the area (14), in which the glass panel (3) is to be decoated, and that the grinding tool (6) is moved to one end (B) and then in opposite movement relative to the glass panel (3) up to the other end (C).

2. Method according to claim 1, **characterized in that** the grinding tool (6) is moved during placement on the glass panel (3) in a direction (arrow 13) that encompasses an acute angle with plane of the glass panel (3), whereby the path of movement of the grinding tool (6) is straight or curved.

3. Method according to claim 1 or 2, **characterized in that** a grinding tool (6) with a grinding element (8) is used, whose active face (9) has at least one groove (11).

4. Method according to one of claims 1 to 3, **characterized in that** a gas stream, in particular an air stream, is directed toward the grinding tool (6) in particular its the active face (9) in order to blow away coating material that accumulated during decoating.

5. Method according to one of claims 1 to 4, **characterized in that** the glass panel (3) is scored in at least one decoated area in order to prepare the division of the glass panel (3).

6. Method according to claim 5, **characterized in that** the glass panel (3) is scored in the center of the at least one decoated area.

## Revendications

1. Procédé pour décaper des panneaux de verre (3), pour lequel on utilise un outil abrasif (6) avec un corps abrasif (8), dont la surface active (9) est pour l'essentiel circulaire et comporte concentriquement à son axe de rotation, un trou (10) qui débouche dans la surface active (9), l'outil abrasif (6) étant déplacé par rapport à l'objet pour enlever un revêtement du panneau de verre (3), **caractérisé en ce que** l'outil abrasif (6) est appliqué sur le panneau de verre (3) à un endroit (A) qui comporte une distance depuis les extrémités (B, C) d'une zone (14) dans laquelle le panneau de verre (3) doit être décapé et **en ce que** l'outil abrasif (6) est déplacé vers une extrémité (B) et est ensuite déplacé jusqu'à l'autre extrémité (C) dans un mouvement opposé par rapport au panneau de verre (3).

2. Procédé selon la revendication 1, **caractérisé en ce que** l'outil abrasif (6) est déplacé lors de l'application sur le panneau de verre (3) dans une direction (flèche 13) qui comprend avec le plan du panneau de verre (3) un angle aigu, la trajectoire de déplacement de l'outil abrasif (6) étant droite ou courbée.

3. Procédé selon la revendication 1 ou 2, **caractérisé en ce qu'**on utilise un outil abrasif (6) avec un corps abrasif (8), dont la surface active (9) comporte au moins une rainure (11).

4. Procédé selon l'une quelconque des revendications 1 à 3, **caractérisé en ce qu'**un flux de gaz, notamment un flux d'air, est dirigé sur l'outil abrasif (6), notamment sa surface active (9) pour éliminer par soufflage lors du décapage le matériau de revêtement en résultant.

5. Procédé selon l'une quelconque des revendications 1 à 4, **caractérisé en ce qu'**un panneau de verre (3) est entaillé dans au moins une zone décapée pour préparer la partition du panneau de verre (3).

6. Procédé selon la revendication 5, **caractérisé en ce que** le panneau de verre (3) est entaillé au centre d'au moins une zone décapée.
